Europäisches Patentamt

European Patent Office

Office européen des brevets

(11) Numéro de publication: **0 354 825**
**A1**

## DEMANDE DE BREVET EUROPEEN

(21) Numéro de dépôt: **89402094.0**

(22) Date de dépôt: **06.07.89**

(51) Int. Cl.⁵: **G 01 D 5/26**

(30) Priorité: **08.07.88 FR 8809300**

(43) Date de publication de la demande:
**14.02.90 Bulletin 90/07**

(84) Etats contractants désignés: **ES**

(71) Demandeur: **THOMSON-CSF**
**51, Esplanade du Général de Gaulle**
**F-92800 Puteaux (FR)**

(72) Inventeur: **Refregier, Philippe**
**c/o THOMSON-CSF; SCPI - CEDEX 67**
**F-92045 Paris la Défense (FR)**

**Rojas, Dominique**
**c/o THOMSON-CSF; SCPI - CEDEX 67**
**F-92045 Paris la Défense (FR)**

**Turpin, Marc**
**c/o THOMSON CSF - SCPI - CEDEX 67**
**F-92045 Paris la Défense (FR)**

(74) Mandataire: **Grynwald, Albert et al**
**THOMSON-CSF SCPI**
**F-92045 PARIS LA DEFENSE CEDEX 67 (FR)**

(54) **Dispositif de lecture par cohérence de capteur optique.**

(57) L'invention concerne un dispositif de lecture fonctionnant par mis en interférence d'un signal de référence, sous forme de train d'ondes fondamental, avec des trains d'ondes retardés constituant le signal utile.

Cet objectif est atteint au moyen d'un dispositif caractérisé en ce qu'il comporte un interféromètre, dont une première branche (32) est parcourue par au moins ledit train d'ondes fondamental (14), et en ce que la dite première branche (32) est munie d'une part de moyens (37, 67, 87) de génération de retards quantifiés dudit train d'ondes fondamental (14), et d'autre part de moyens (39) de génération d'un retard continuement variable dudit train d'ondes fondamental (14) sur une plage autour de chaque valeur quantifiée de retard.

FIG.3

## Description

## Dispositif de lecture par cohérence de capteur optique

L'invention concerne un dispositif destiné à l'analyse et à la lecture d'un signal optique du type analysable comme au moins un train d'ondes fondamental associé à un jeu de trains d'ondes secondaires, issus du dit train fondamental et accusant un jeu de retards correspondants par rapport au dit train d'ondes fondamental.

Le principe général de lecture consiste à retarder un signal de référence, à savoir par exemple le train d'ondes fondamental, afin de provoquer une interférence du dit signal de référence avec les signaux contenant l'information à analyser, à savoir par exemple chacun des dits trains d'ondes secondaires.

La dite information à analyser peut être par exemple la distance entre les trains d'ondes ou encore l'amplitude des trains d'ondes secondaires.

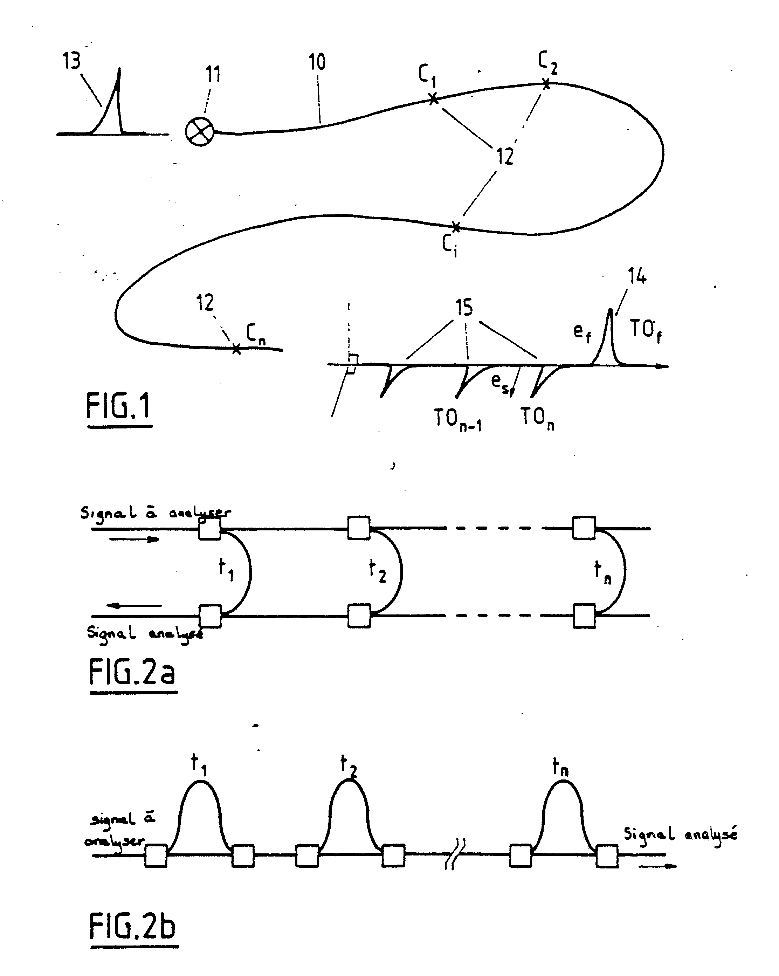

Ce type de signal est par exemple obtenu en sortie d'une fibre monomode à maintien de polarisation, associée à une source 11 à spectre large linéairement polarisée (ou une source émettant un faisceau, polarisé linéairement à l'extérieur de la source), la fibre comportant des points de couplage 12 entre les deux axes biréfringents (Fig. 1). Le capteur optique proprement dit est constitué par le tronçon de fibre comportant les points de couplage 12, et peut être soit intrinsèque (c'est à dire la fibre elle-même), ou extrinsèque (sous forme d'élément extérieur).

Les points de couplage 12 sont par exemple constitués par l'introduction d'un léger décalage en rotation des axes de biréfringence dans la fibre, en chaque point $c_1$, $c_2$, ... $c_n$. Chacun de ces décalages, qui sont en général faibles afin d'éviter les couplages multiples, introduit une perturbation du train d'ondes fondamental polarisé 13 émis par la source 11. Chaque perturbation génère ainsi un train d'ondes secondaire 15, en polarisation orthogonale par rapport au train d'onde fondamental 13-14. En d'autres termes, en supposant le train d'onde d'entrée 13 couplé dans le mode rapide, on récupère en sortie :

- un train d'ondes fondamental $TO_f$ 13, resté dans le mode rapide, et d'amplitude $e_f$.
- une série de trains d'ondes secondaires $TO_i$ 15, couplés dans le mode lent, et d'amplitude $e_i$.

Il est ensuite possible de projeter l'ensemble des trains d'ondes 14-15 dans le même état de polarisation, au moyen par exemple d'un polariseur à 45° des axes de biréfringence.

Un tel capteur à points de couplage multiples 12 peut par exemple être utilisé comme sonde continue de température, en utilisant les propriétés thermosensibles du différentiel de vitesse de propagation entre les deux axes de biréfringence de la fibre optique. Dans ce cas, l'analyse et la lecture du signal reçu du capteur consistent à mesurer le retard effectif de chaque train d'ondes secondaire 15 par rapport au train d'ondes fondamental de sortie 14. De façon connue, une telle lecture s'effectue en retardant le signal fondamental dans le dispositif de lecture, jusqu'à détecter son interférence avec chacun des trains d'ondes secondaires. La valeur du retard lue permet de calculer la température, après é talonnage du dispositif.

De facon connue, le moyen le plus simple (au moins conceptuellement) de réaliser une telle lecture consiste à utiliser un interféromètre de Michelson balayable, afin d'induire le retard nécessaire pour que le train d'ondes fondamental puisse interférer avec les trains d'ondes $TO_i$.

Cependant, si on considère un capteur comprenant 100 points de couplage répartis avec un intervalle de 10 m entre chaque couplage et une fibre dont la biréfringence est de $5.10^{-4}$, le balayage de l'interféromètre doit être 50 cm. Compte tenu de la précision mécanique nécessaire, une telle plage de balayage entraîne une fréquence de lecture relativement faible et une souplesse d'utilisation limitée : la lecture ne peut ê tre qu'à accès séquentiel (train d'ondes N1, puis N2, puis N3 etc...).

Une seconde méthode adaptée à ce type de dispositif consisterait à traiter en parallèle les différents trains d'ondes (fig. 2a). Cependant dans ce cas, le nombre de détecteurs doit être de l'ordre du nombre de couplages. Pour pallier cet inconvénient, on peut utiliser des coupleurs actifs. Là encore, le nombre de coupleurs doit ê tre de l'ordre du nombre de points de couplages (typiquement environ 100), quelque soit la structure parallèle ou série adoptée.

En outre, la structure série (Fig. 2b) présente l'inconvénient d'atténuer (à cause des passages répétés dans les coupleurs commutables si par exemple ils sont de type optique intégrée), les trains d'onde secondaires $TO_i$, ce qui dégrade d'autant le rapport signal sur bruit.

Le dispositif selon l'invention a pour objectif de pallier ces divers inconvénients.

Plus précisément, un premier objectif de l'invention est de fournir un dispositif de lecture par cohérence de capteur optique, qui réalise un traitement du signal à analyser sans dégrader le rapport signal sur bruit.

Par lecture par cohérence, on entend essentiellement le principe consistant à provoquer l'interférence des trains d'ondes fondamental et secondaires.

Un second objectif de l'invention est de fournir un tel dispositif de lecture qui assure d'une part un balayage rapide de l'ensemble du domaine de retard admissible, tout en permettant un balayage fin complémentaire assurant une mise en interférence et donc une lecture précises des retards.

Un autre objectif de l'invention, dans un mode de réalisation spécifique, est de fournir un dispositif de lecture permettant une lecture simultanée et parallèle des différents retards de l'ensemble des trains d'onde secondaires provenant du capteur optique.

Ces objectifs ainsi que d'autres qui apparaîtront par la suite sont atteints à l'aide d'un dispositif de lecture par cohérence de capteur optique, du type fournissant un signal à traiter analysable comme au moins un train d'ondes fondamental associé à un jeu de trains d'ondes secondaires issus du dit train d'ondes fondamental et accusant un jeu de retards correspondants par rapport au dit train d'ondes fondamental, ledit dispositif é tant destiné à amener ledit train d'ondes fondamental en interférence avec chacun des dits trains d'ondes secondaires, caractérisé en ce qu'il comporte un interféromètre, dont une première branche est parcourue par au moins ledit train d'ondes fondamental, et une seconde branche est parcourue par au moins ledit train d'ondes secondaires, et en ce que ladite première branche à retard est munie d'une part de moyens de génération de retards quantifiés du dit train d'ondes fondamental, et d'autre part de moyens de génération d'un retard continuement variable sur une plage autour de chaque valeur quantifiée de retard.

L'interféromètre peut ê tre un interféromètre de Mach Zehnder, de Michelson, ou tout autre type d'interféromètre.

Un tel dispositif présente l'avantage que le rapport signal sur bruit n'est que très peu dégradé du fait que la structure dissymétrique de l'interféromètre. de Mach Zehnder par exemple, revient à n'atténuer que l'amplitude du train d'onde fondamental, qui seul constitue le signal utile parcourant la branche à retard de l'interféromètre. Les trains d'ondes secondaires "utiles", qui viennent en interférence avec le train d'ondes fondamental retardé, parcourent, eux, la branche de l'interféromètre dépourvue d'éléments optiques.

Dans un mode de réalisation avantageux de l'invention, les moyens de génération de retards quantifiés sont constitués par un jeu de lignes élémentaires à retard, placées en série sur la dite branche à retard de l'interféromètre, chacun des dits moyens de génération de retards quantifiés étant sélectivement commutable dans la dite branche de façon à fournir une combinaison de valeurs quantifiées de retards par combinaison des lignes élémentaires simultanément et sélectivement commutées.

Dans un autre mode de réalisation, les dits moyens de génération de retards quantifiés sont associés à des moyens de décalage en fréquence du signal retardé, de façon que chaque valeur de retard corresponde à un décalage en fréquence spécifique. Les dits moyens de génération de retards quantifiés sont préférentiellement constitués par un jeu de lignes é lémentaires à retard consécutives et couplées chacune en parallèle sur la dite branche à retard de l'interféromètre, de façon à fournir simultanément une combinaison de valeurs quantifiées de retards associées chacune à un décalage en fréquence spécifique, par combinaison linéaire des trajets optiques suivis par le signal retardé.

Dans les deux modes de réalisation, il est avantageux d'utiliser des lignes é lémentaires à retard présentant des valeurs de retard distribuées selon une progression géométrique. Ceci permet par exemple d'engendrer $2^n$ retards à partir de n retards de base, en considérant les combinaisons linéaires de ces n retards de base.

Dans une variante de réalisation du deuxième mode de réalisation, les moyens de génération des retards quantifiés sont constitués par une ligne à retard et à décalage en fréquence couplée en parallèle et en bouclage sur la dite branche à retard de l'interféromètre.

D'autres caractéristiques et avantages de l'invention apparaîtront à la lecture de la description suivante de quelques modes de réalisation de l'invention, donnés à titre illustratif, et des dessins annexés dans lesquels :

- la figure 1 schématise la configuration d'un capteur optique à multiplexage par cohérence, du type associé au dispositif de lecture suivant l'invention ;

- les figures 2a et 2b illustrent deux structures possibles mais défavorables, de traitement parallèle et série respectivement du jeu de trains d'ondes secondaires du signal analysé ;

- la figure 3 schématise le premier mode de réalisation du dispositif de lecture suivant l'invention, avec lignes é lémentaires à retard sélectivement commutables ;

- les figures 4 et 5 sont des diagrammes illustrant une variante d'application du dispositif de lecture suivant l'invention à des signaux optiques à plusieurs trains d'onde fondamentaux, permettant soit de limiter le nombre d'éléments actifs, soit la plage d'exploration respectivement ;

- la figure 6 schématise un second mode de réalisation du dispositif de lecture suivant l'invention, avec lignes élémentaires à retard et à décalage en fréquence couplées consécutivement, en parallèle, sur la branche à retard de l'interféromètre de Mach Zehnder ;

- la figure 7 est un diagramme illustrant le fonctionnement du mode de réalisation de la figure 6 ;

- la figure 8 illustre une variante du mode de réalisation de la figure 6, avec ligne élémentaire à retard unique, couplée en parallèle et en bouclage arrière sur la branche à retard de l'interféromètre de Mach Zehnder ;

- la figure 9 illustre une seconde variante du mode de réalisation de la figure 6, avec séparateurs à déperdition minimale.

- la figure 10 illustre une mise en oeuvre du dispositif de lecture de l'invention sous forme d'un interféromètre de Michelson.

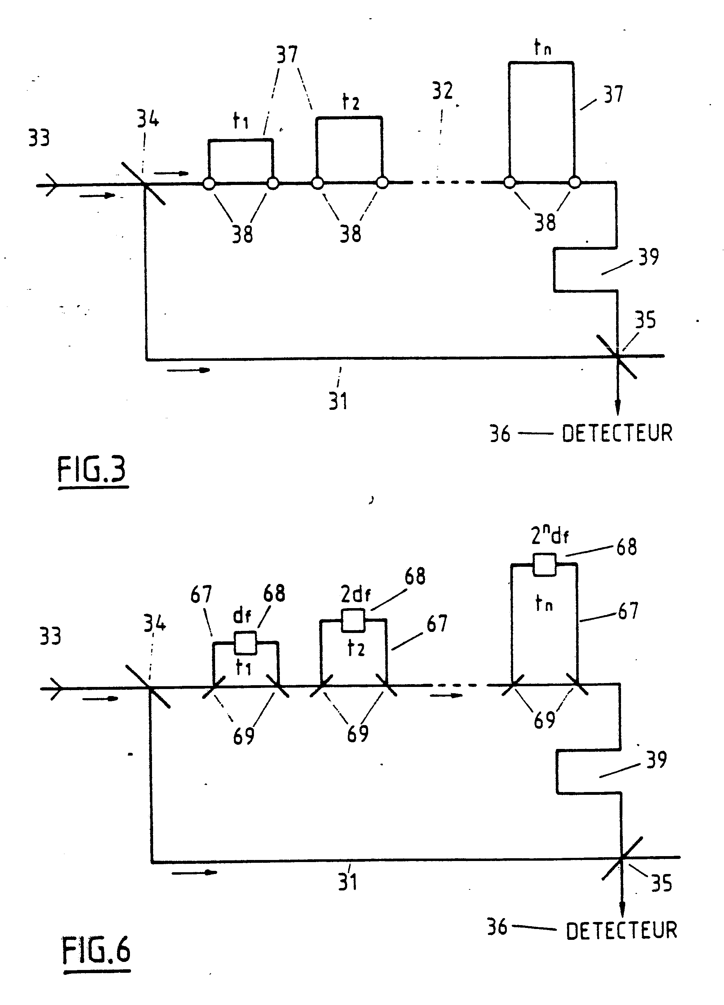

Comme représenté en figure 3, le dispositif de lecture suivant l'invention comporte un interféromètre, en l'occurrence un interféromètre de Mach Zehnder, dont :

- le premier bras 31 contient le signal à analyser,

- le second bras 32 engendre des retards, de façon discrète, sur le signal de référence, afin de permettre l'interférence avec les différents signaux à analyser.

Le signal source à analyser 33 est divisé entre les deux bras 31, 32 de l'interféromètre de Mach Zehnder au moyen d'un séparateur 34. Un composant optique 35 est monté en sortie des deux bras 31 - 32, afin de superposer les trains d'ondes secondaires à analyser ainsi que le train d'onde fondamental retardé, vers le système détecteur 36.

Le bras de retard 32 comporte des lignes élémentaires à retard 37, sélectivement commutables dans le bras. Des moyens de commutation 38 assurent sélectivement, pour chaque ligne élémentaire à retard 37, soit l'orientation du signal dans la ligne élémentaire, soit son shuntage. Ces moyens de commutation 38 peuvent être par exemple constitués par des commutateurs diélectriques liquides, ou de préférence des commutateurs optiques intégrés tels que décrits dans le document: "L'optique guidée monomode et ses applications", publié en 1985 aux Editions Masson. Tout moyen de commutation assurant la fonction correspondante convient également.

De façon avantageuse, les lignes élémentaires à retard 37' sont distribuées selon une progression géométrique des retards.

A titre d'exemple, dans le cas où les retards des différents trains d'onde secondaires sont des multiples entiers d'un retard élémentaire, ce qui correspond au cas où tous les capteurs mesurent le même signal, la suite des retards à induire est : $t1 = t$ ; $t2 = 2t$ ; $t3 = 4t$ ; ... ; $tn = 2^{n-1} t$.

Avec une telle distribution des valeurs de retard des lignes élémentaires 37, on peut ainsi engendrer $2^n$ retards à partir de n lignes 37 selon le schéma de fonctionnement suivant :

| Retards activés | Retard total |
|---|---|
| aucun | 0 |
| t1 | t |
| t2 | 2t |
| t1 + t2 | 3t |
| t3 | 4t |

Une fois les retards principaux induits, il suffit de disposer en série (à l'intérieur ou l'extérieur des bras) un moyen de génération d'un retard variable 39 afin d'explorer une plage continue autour des retards principaux, qui sont par construction de nature discrète. Afin de limiter cette plage d'exploration, des retards discret supplémentaires peuvent être ajoutés au système.

Cette solution a le mérite de limiter le nombre de commutateurs optiques 38 nécessaires (typiquement de l'ordre du logarithme du nombre de couplages) ce qui atténue au minimum le signal à analyser tout en permettant une exploration rapide des différents couplages dans un ordre a priori quelconque.

La figure 6 correspond à un second mode de réalisation du dispositif de lecture suivant l'invention dans lequel les retards du train d'onde fondamental sont générés par des lignes élémentaires à retard 67 associées chacune à des moyens (68) de décalage en fréquence du signal retardé. De cette façon, chaque retard t s'accompagne d'un décalage en fréquence spécifique df du signal retardé. Chacune des lignes élémentaires à retard 67 est couplée en parallèle, au moyen de séparateurs optiques 69, sur la branche à retard 32 de l'interféromètre de Mach Zehnder.

Les moyens 68 de décalage en fréquence sont par exemple constitués par un retardateur à effet Doppler, ou à cristal acousto- optique, ou encore par un modulateur de phase , thermooptique et/ou électrooptique, ou autre.

Ce mode de réalisation permet de réaliser une lecture parallèle des retards de chacun des trains d'onde secondaires grâce à un multiplexage fréquentiel des différents retards.

Ainsi, pour le retard t1, le décalage en fréquence doit être df ; pour t2, 2df ; pour t3, 3df ; etc.... De la sorte, le décalage en fréquence sera différent pour chacune des combinaisons linéaires des retards de base.

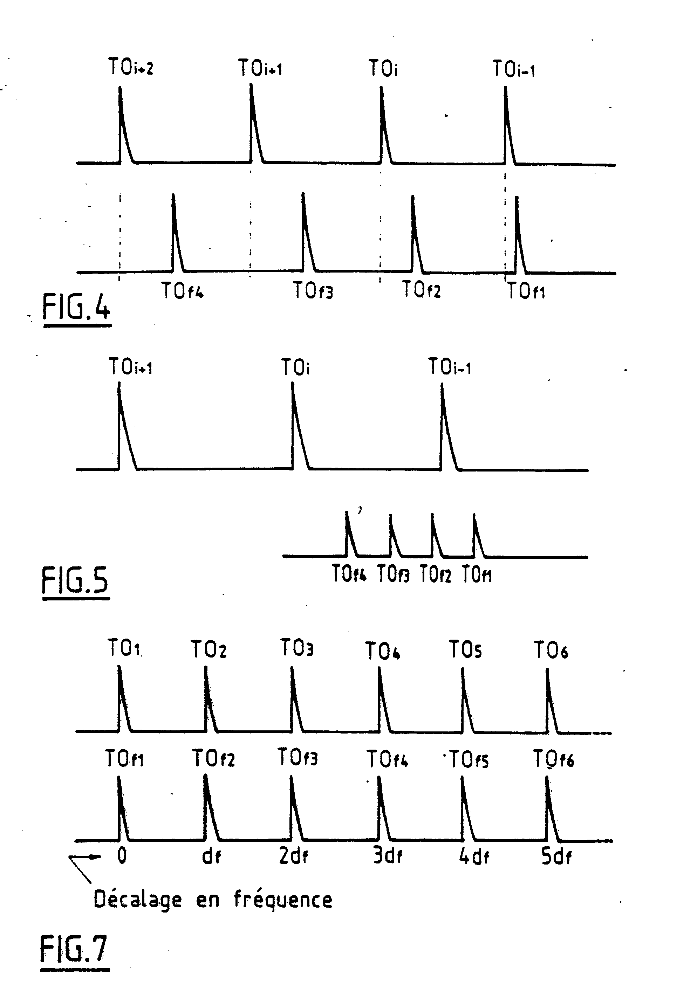

En sortie de l'interféromètre, on sera alors en présence des trains d'ondes tels que représentés en figure 7 :
- les trains d'onde secondaires $TO_i$, provenant de la branche 31 de l'interféromètre, et maintenus à la fréquence optique f ;
- les trains d'ondes fondamentaux retardés $TO_{fi}$, ayant subi les différents retards, ainsi que les décalages en fréquence correspondants.

Chaque couple d'interférence $(TO_i, TO_{fi})$ se trouve donc à une fréquence décalée spécifique (i-1) df. Une analyse en séries de Fourier permet donc de démultiplexer les différentes interférences.

Dans le cas particulier où la suite des retards à induire est la suivante : t, 2t, 3t, 4t, etc..., le tableau suivant illustre les combinaisons de lignes élémentaires à retard permettant d'obtenir chacun des retards quantifiés 0, t, 2t, 3t, 4t, etc, et les décalages en fréquence correspondants df, 2 df, 3 df, 4 df, ....

| Retards activés | retard total | Décalage en fréquence |
|---|---|---|
| 0 | 0 | 0 |
| t1 | t | df |
| t2 | 2t | 2df |
| t1 + t2 | 3t | 3df |
| t3 | 4t | 4df |

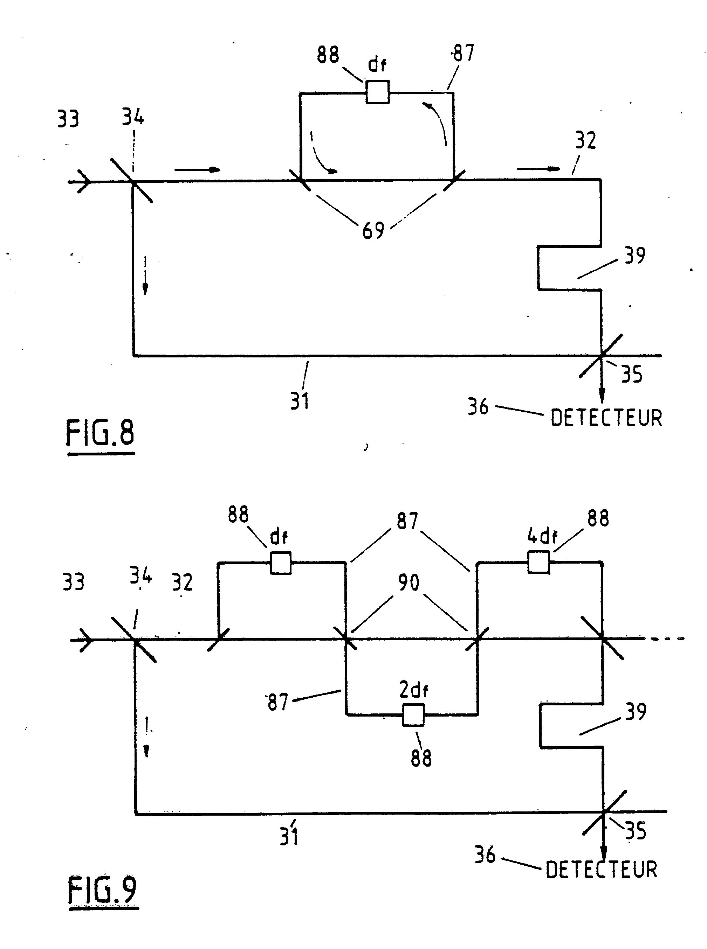

La figure 8 illustre une version compacte du mode de réalisation à retard quantifié et décalage en fréquence. Dans ce mode de réalisation, une seule ligne élémentaire à retard 87 est branchée en parallèle et en bouclage arrière sur la branche à retard 32 de l'interféromètre. Un décalage en fréquence df 88 est généré à chaque parcours de la ligne 87.

Dans le mode de réalisation de la figure 9, les lignes élémentaires à retard 67 sont connectées au moyen de séparateur 90 à deux entrées et deux sorties, permettant d'assurer une déperdition minimale, et donc un bilan énergétique optimal en la branche à retard 32.

Dans une variante du mode de réalisation de la fig. 3, il peut être intéressant de remplacer toute ou partie des commutateurs 38 par des coupleurs passifs, par exemple des séparateurs 50/50, assurant une division du signal entre la branche à retard 32 et les lignes élémentaires à retard 37. L'utilisation de plusieurs coupleurs passifs permet de multiplier le nombre de trains d'ondes fondamentaux, puisque plusieurs lignes élémentaires à retard 37 fonctionnent simultanément. Si le retard entre ces trains d'ondes est différent des retards qui séparent les trains d'ondes dus aux couplages (TO$_i$), la mesure reste possible.

Cette option peut être adaptée pour deux buts différents :
- limiter le nombre d'éléments actifs. Dans ce cas le principe de fonctionnement est illustré en Fig. 4, pour quatre trains d'ondes fondamentaux. La lecture s'effectue alors à la manière d'un vernier, en amenant chacun des trains d'ondes secondaires TO$_i$ en interférence avec le train d'ondes fondamental le plus proche. Ainsi, la lecture de TO$_{i-1}$ se fait en faisant interférer ce train d'ondes avec TO$_{f1}$, les autres trains d'ondes (TO$_{f2}$, TO$_{f3}$, TO$_{f4}$) n'étant pas en coïncidence avec les trains d'onde TO$i$ et ainsi de suite.
- limiter la plage d'exploration, comme illustré en fig.5. Ce mode de réalisation suppose que la branche à retard 32 de l'interféromètre de la fig. 3 soit munie d'une part de lignes élémentaires à retard à coupleurs passifs (pour la génération de plusieurs trains d'ondes fondamentaux), et d'autre part de lignes élémentaires à retard à commutateurs (pour le balayage rapide, par retards discrets, de l'ensemble du domaine de lecture). Ainsi, les TO$_{fi}$ peuvent être d'amplitude différente afin de discerner avec quel train d'onde TO$_i$ interfère.

Le dispositif de lecture suivant l'invention est particulièrement attrayant pour les capteurs à fibre, du fait de la possibilité de le réaliser en "tout fibre" :
- les commutateurs peuvent être du type "optique intégrée" et/ou des commutateurs diélectriques liquides comme décrit dans la demande de brevets français 8310914 ("dispositif à commande électrique de déplacement de fluide");
- les systèmes de décalage en fréquence du second mode de réalisation de la figure 6 peuvent être constitués par des modulateurs de phase, de type piézo-optique, acousto-optique ou optique intégrée ;
- les moyens de génération d'un retard variable 39 peuvent être réalisés par exemple sous forme d'une fibre entourée d'une gaine conductrice. En faisant circuler un courant dans la gaine, on peut ainsi chauffer la fibre et en faire varier le chemin optique (voir "Optical Fiber Thermal Modulator", Lightwave Technology ; Vol. LT-5 nx 9, septembre 1987). Une autre possibilité consiste à utiliser une fibre optique enroulée sur une céramique piézoélectrique, de façon qu'à l'application d'une tension à la céramique, son diamètre varie et entraîne une variation de la longueur de la fibre et donc du chemin optique.

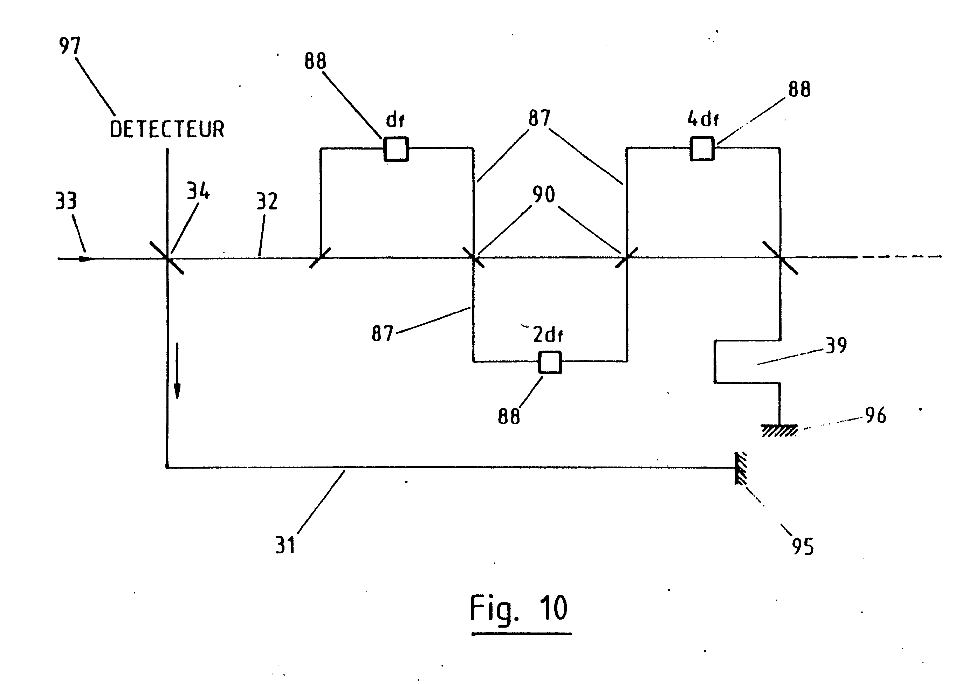

La figure 10 illustre un mode de réalisation du dispositif de l'invention en utilisant un interféromètre fonctionnant selon le principe de Michelson. Dans ce mode de réalisation, le signal optique est renvoyé, au bout de chacune des deux branches 31, 32, par deux miroirs 95 et 96. Les signaux réfléchis sont ensuite mis en coincidence en sortie sur la lame séparatrice 34, et envoyés vers un détecteur 97.

On notera que l'invention ne se limite pas a l'utilisation d'un inteféromètre de Mach Zehnder ou de Michelson, mais s'étend à tout autre type d'interféromètre compatible.

## Revendications

1) Dispositif de lecture par cohérence de capteur optique, du type fournissant un signal à traiter analysable comme au moins un train d'ondes fondamental (14) associé à un jeu de trains d'ondes secondaires (15) issus du dit train d'ondes fondamental (14) et accusant un jeu de retards (t$_1$, t$_2$, ... tn) correspondants par rapport au dit train d'onde fondamental (14), ledit dispositif étant destiné à amener ledit train d'ondes fondamental (14) en interférence avec chacun des dits trains d'ondes secondaires (15),
dispositif caractérisé en ce qu'il comporte un inteféromètre, dont une première branche (32) est parcourue par au moins ledit train d'ondes fondamental (14), et une seconde branche est parcourue par au moins lesdits trains d'ondes secondaires,
et en ce que ladite première branche (32) est munie de moyens (37, 39, 67, 87) de génération de retards variables dudit train d'ondes fondamental (14).

2) Dispositif selon la revendication 1 caractérisé en ce que les dits moyens de génération de retards quantifiés sont constitués par un jeu de lignes élémentaires à retard (37), placées en série sur la dite branche à retard (32), chacune des dites lignes élémentaires (37) étant sélectivement commutable dans la dite branche (32) de façon à fournir une combinaison de valeurs quantifiées de retards (t, 2t, 3t, ...) par combinaison (t1, t2, t1 + t2...) des lignes élémentaires (37) simultanément et sélectivement commutées.

3) Dispositif suivant la revendication 2 caractérisé en ce que les dites lignes élémentaires à retard (37) ont des valeurs de retard distribuées selon une progression géométrique (t, 2t, 4t, .... , 2$^n$ t).

4) Dispositif suivant la revendication 2 caractérisé en ce que les dits moyens de commutation (38) des dites lignes élémentaires à retard sont des commutateurs à diélectrique liquide.

5) Dispositif suivant la revendication 1 caractérisé en ce que les dits moyens de génération de retards quantifiés (67, 87) sont associés à des moyens (68) de décalage en fréquence du signal retardé, de façon que chaque valeur de retard (t$_i$) corresponde à un décalage en fréquence spécifique.

6) Dispositif suivant la revendication 5 caractérisé en ce que les dits moyens de génération de retards quantifiés (67) sont constitués par un jeu de lignes élémentaires à retard (67), consécutives et couplées chacune en parallèle sur la dite branche à retard (32), de façon à fournir simultanément une combinaison de valeurs quantifiées de retards (t, 2t, 3t,...) associées chacune à un décalage en fréquence (df, 2df, 3df...) spécifique par combinaison des trajets optiques suivis par le signal retardé.

7) Dispositif suivant la revendication 5 caractérisé en ce que les dites lignes élémentaires à retard (67), ainsi que les valeurs de décalage en fréquences (df) correspondantes, ont des valeurs de retard, de décalage en fréquence respectivement, distribuées selon une progression géométrique.

8) Dispositif suivant la revendication 5 caractérisé en ce que les dits moyens de génération de retards quantifiés (87) sont constituées par une ligne unique (87, 88) à retard et à décalage en fréquence, couplée en parallèle et en bouclage arrière sur la dite branche à retard (32).

9) Dispositif suivant l'une quelconque des revendications 5 et 8 caractérisé en ce que les moyens de couplage des dites lignes é lémentaires à retard (67, 87) sont constituées par des séparateurs optiques (69, 90) destinés à diviser le signal à chaque point de couplage.

10) Dispositif suivant les revendications 6 et 9 caractérisé en ce qu'il comporte des séparateurs (90) à deux entrées et deux sorties à déperdition minimale, insérés chacun dans la branche à retard (32) entre deux lignes é lémentaires à retard consécutives (67).

11) Dispositif suivant la revendication 5 caractérisé en ce que les dits moyens (39) de décalage en fréquence appartiennent au groupe comprenant les retardateurs à effet Doppler, ou à cristal acousto optique, les moduleurs de phase, thermooptique et/ou électrooptique.

12) Dispositif selon l'une quelconque des revendications 1 à 11 caractérisé en ce qu'il est associé à un capteur à multiplexage par cohérence, du type constitué par une fibre monomode (10) à maintien de polarisation comportant des points de couplage (12) entre les deux axes de biréfringence.

13) Dispositif suivant la revendication 1 caractérisé en ce que le dit interféromètre est muni de moyens de lecture de la distance entre les trains d'onde et/ou de l'amplitude des trains d'onde couplés.

14) Dispositif suivant la revendication 1 caractérisé en ce que les dits moyens (39) de génération d'un retard variable sont constitués par un système à fibre optique thermorégulée.

15) Dispositif suivant la revendication 1 caractérisé en ce que la dite branche à retard (32) comprend un jeu de lignes é lémentaires à retard connectées en série par coupleurs passifs sur la dite branche à retard (32), de façon à fournir simultanément plusieurs trains d'ondes fondamentaux à retards distincts.

16) Dispositif selon la revendication 1, caractérisé en ce que ledit interféromètre appartient au groupe comprenant les interféromètres de Mach Zehnder et de Michelson.

17) Dispositif selon la revendication 1, caractérisé en ce que lesdits moyens de génération de retards variables dudit train d'ondes fondamental (14) comportent des moyens de generation de retards quantifiés (37, 67, 87) du train d'ondes fondamental et des moyens de génération d'un retard continuement variable dudit train d'ondes fondamental autour de chaque valeur quantifiée de retard.

18) Dispositif suivant la revendication 1, caractérisé en ce que lesdits moyens de commutation (38) desdites lignes élémentaires à retard sont des commutateurs réalisés en optique intégrée.

FIG.1

FIG.2a

FIG.2b

FIG.3

FIG.6

FIG.4

FIG.5

Décalage en fréquence

FIG.7

FIG.8

FIG.9

Fig. 10

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 251 632 (THE BOARD OF TRUSTEES OF THE LELAND STANFORD JUNIOR UNIVERSITY) <br> * Figure 1; page 8, lignes 18-26 * <br> --- | 1,2 | G 01 D    5/26 |
| A | EP-A-0 191 589 (THE BOARD OF TRUSTEES OF THE LELAND STANFORD JUNIOR UNIVERSITY) <br> * Figure 3; page 25, ligne 23 - page 27 * <br><br> --- | 1,5 | |
| A | PATENT ABSTRACTS OF JAPAN, vol. 5, no. 182 (P-90)[854], 20 novembre 1981, page 149 P 90; & JP-A-56 111 415 (TOKYO SHIBAURA DENKI K.K.) 03-09-1981 <br> * Résumé * <br> --- | 1,5 | |
| A | JOURNAL OF LIGHTWAVE TECHNOLOGY, vol. LT-5, no. 2, février 1987, pages 229-235, IEEE, New York, US; K. BLOTEKJAER et al.: "Choosing relative optical path delays in series-topology interferometric sensor arrays" <br> * Figure 3 * <br> ----- | 1 | DOMAINES TECHNIQUES RECHERCHES (Int. Cl.5) <br><br> G 01 D    5/00 <br> G 01 J    9/00 |

Le présent rapport a été établi pour toutes les revendications

| Lieu de la recherche | Date d'achèvement de la recherche | Examinateur |
|---|---|---|
| LA HAYE | 18-10-1989 | BATTESON A. |

EPO FORM 1503 03.82 (P0402)